# EUROPEAN PATENT APPLICATION

(11) **EP 4 780 090 A1**
(43) Date of publication of application: **22.07.2026**
(21) Application number: 25227529.2
(22) Date of filing: 30.12.2025
(51) Int. Cl.: H04W 52/28, H04W 52/34, H04W 52/44

(54) **APPARATUSES AND METHODS FOR TRANSMISSION POWER PERIODICITY**

(30) Priority: 17.01.2025 FI 20255027
(71) Applicant: Nokia Solutions and Networks Oy, 02610 Espoo (FI)
(72) Inventor: HATHIRAMANI, Navin, Coppell, TX (US)
(74) Representative: Nokia EPO representatives

(57) **Abstract**

Disclosed is an apparatus and a method comprising receiving configuration information that at least indicates, for at least one beam in the cell, a periodicity of a first transmission power and a second transmission power in the cell, wherein the first transmission power is lower than the second transmission power, obtaining cell measurement results, applying the configuration information to determine whether cell measurement results are obtained during a first transmission power period or during the second transmission power period, and modifying measurement results obtained during at least one of the first transmission power period or the second transmission power period to compensate the transmission power difference.

## Description

### FIELD

The following example embodiments relate to wireless communication.

### BACKGROUND

In wireless communication at least part of a connection is a non-physical connection, in which data is sent and received over the air, for example over radio frequencies. As resources over the air are limited, it is desirable to optimize the usage of such resources.

### SUMMARY

The scope of protection sought for various example embodiments is set out by the claims. The example embodiments and features, if any, described in this specification that do not fall under the scope of the claims are to be interpreted as examples useful for understanding various embodiments.

According to an aspect, there is provided an apparatus comprising: at least one processor, and at least one memory storing instructions that, when executed by the at least one processor, cause the apparatus to at least: receive, from a cell in a wireless network, configuration information that at least indicates, for at least one beam in the cell, a periodicity of a first transmission power and a second transmission power in the cell, wherein the first transmission power is lower than the second transmission power, obtain cell measurement results, apply the configuration information to determine whether cell measurement results are obtained during a first transmission power period or during the second transmission power period, and modify, at least when in an idle or in an inactive state, cell measurement results obtained during at least one of the first transmission power period or the second transmission power period to compensate the transmission power difference.

According to an example embodiment, there is provided the apparatus wherein the periodicity indicates at least one of consecutive slots that have the first transmission power within a frame and form the first transmission power period, or a number of consecutive frames having the first transmission power and forming a first transmission power period, and a number of consecutive frames having the second transmission power and forming a second transmission power period, the first and second transmission power periods alternating.

According to an example embodiment, there is provided the apparatus wherein the at least one memory and computer program code configured to, with the at least one processor, cause the apparatus further to: apply a first radio link failure process during first transmission power periods, and a second radio link failure process during second transmission power periods, wherein the number of failures to be detected to determine an occurrence of a radio link failure is bigger in the first radio link failure process than in the second radio link failure process.

According to an example embodiment, there is provided the apparatus wherein the at least one memory and computer program code configured to, with the at least one processor, cause the apparatus further to: apply a first random access process during the first transmission power periods, and a second random access process during the second transmission power periods, wherein the number of failed attempts to be detected to inform upper layer on random access procedure failure is bigger in the first random access channel process than in the second random access channel process.

According to an example embodiment, there is provided the apparatus wherein the at least one memory and computer program code configured to, with the at least one processor, cause the apparatus further to: determine, when, after a failed random access attempt during the first transmission power period the upper layers are to be informed, an occasion following the next occasion for a random access attempt is during the second transmission power period, not to inform the upper layers but to attempt random access in the next occasion.

According to an example embodiment, there is provided the apparatus wherein the at least one memory and computer program code configured to, with the at least one processor, cause the apparatus, when the apparatus is in a connected state, further to perform at least one of: modifying the cell measurement results obtained during at least one of the first transmission power period or the second transmission power period to compensate the transmission power difference, and transmitting at least the modified measurement results in measurement reports to the wireless network, or transmitting, per a measurement report, at least one cell measurement result obtained during the first transmission power period and at least one cell measurement result obtained during the second transmission power period.

According to an example embodiment, there is provided the apparatus wherein the at least one memory and computer program code configured to, with the at least one processor, cause the apparatus further to: transmit, upon determining that a connection to the wireless network is poor during the first transmission power period, to the wireless network a report indicating that the connection is poor.

According to an example embodiment, there is provided the apparatus wherein the at least one memory and computer program code configured to, with the at least one processor, cause the apparatus further to: receive configuration information comprising a configuration for at least one of a discontinuous transmission or a discontinuous reception during the first transmission power periods, and apply the configuration.

According to an example embodiment, there is provided the apparatus wherein the at least one memory and computer program code configured to, with the at least one processor, cause the apparatus further to: determine, prior to modifying the cell measurement results, whether a preset condition is met, and to modify the cell measurement results when the condition is met.

According to an aspect, there is provided an apparatus comprising: at least one processor, and at least one memory storing instructions that, when executed by the at least one processor, cause the apparatus to at least: provide at least a cell in a wireless network, transmit, in the cell, configuration information that at least indicates, for at least one beam in the cell, a periodicity of a first transmission power and a second transmission power in the cell, wherein the first transmission power is lower than the second transmission power, apply the transmission power to downlink transmissions according to the configuration information, and schedule at least broadcasting of control information comprising one or more of a synchronization signal, system information or paging to occur during at least the second transmission power period.

According to an example embodiment, there is provided the apparatus wherein the at least one memory and computer program code configured to, with the at least one processor, cause the apparatus further to: schedule user plane traffic to connected apparatuses based on the configuration information, and received reports from the connected apparatuses, a report indicating a condition of a corresponding connection, to the second transmission power periods by prioritizing connected apparatuses with a poor condition of a corresponding connection.

According to an example embodiment, there is provided the apparatus wherein the at least one memory and computer program code configured to, with the at least one processor, cause the apparatus further to: schedule at least one of repetitions of control information to occur during the first transmission power period or repetitions of user plane traffic scheduled during the first transmission power period to occur during the second transmission power period.

According to an example embodiment, there is provided the apparatus wherein the at least one memory and computer program code configured to, with the at least one processor, cause the apparatus further to: detect that a connection to a connected apparatus is poor during the first transmission power period, determine, based on the connection to the connected apparatus being poor during the first transmission power period, whether to configure the connected apparatus to use at least one of discontinuous transmission or discontinuous reception during the first transmission power period, and transmit, when the connected apparatus is to be configured to use at least one of the discontinuous transmission or the discontinuous reception during the first transmission power period, configuration information comprising a configuration for at least one of the discontinuous transmission or the discontinuous reception during the first transmission power periods to the connected apparatus.

According to an example embodiment, there is provided the apparatus wherein the at least one memory and computer program code configured to, with the at least one processor, cause the apparatus further to: detect that a connected apparatus with stringent quality of service requirements for a connection has a poor connection during the first transmission power periods, offload, based on the connected apparatus with stringent quality of service requirements for the connection having a connection that fails to meet the stringent quality of service requirements during the first transmission power periods, the connected apparatus to another cell.

According to an example embodiment, there is provided the apparatus wherein the at least one memory and computer program code configured to, with the at least one processor, cause the apparatus further to: receive from a connected apparatus a measurement report comprising cell measurement results, apply the configuration information to determine whether cell measurement results are obtained during the first transmission power period or during the second transmission power period, and modify cell measurement results obtained during at least one of the first transmission power period or the second transmission power period to compensate the transmission power difference.

According to an example embodiment, there is provided the apparatus wherein the periodicity indicates at least one of consecutive slots that have the first transmission power within a frame and form the first transmission power period, or a number of consecutive frames having the first transmission power and forming a first transmission power period, and a number of consecutive frames having the second transmission power and forming a second transmission power period, the first and second transmission power periods alternating.

According to an aspect, there is provided a method comprising: receiving, from a cell in a wireless network, configuration information that at least indicates, for at least one beam in the cell, a periodicity of a first transmission power and a second transmission power in the cell, wherein the first transmission power is lower than the second transmission power, obtaining cell measurement results, applying the configuration information to determine whether cell measurement results are obtained during a first transmission power period or during the second transmission power period, and modifying, at least when in an idle or in an inactive state, cell measurement results obtained during at least one of the first transmission power period or the second transmission power period to compensate the transmission power difference.

According to an aspect, there is provided a method comprising: providing at least a cell in a wireless network, transmitting, in the cell, configuration information that at least indicates, for at least one beam in the cell, a periodicity of a first transmission power and a second transmission power in the cell, wherein the first transmission power is lower than the second transmission power, applying the transmission power to downlink transmissions according to the configuration information, and scheduling at least broadcasting of control information comprising one or more of a synchronization signal, system information or paging to occur during at least the second transmission power period.

According to an aspect, there is provided a non-transitory computer readable medium comprising program instructions which, when executed by an apparatus cause the apparatus to perform at least the following: receiving, from a cell in a wireless network, configuration information that at least indicates, for at least one beam in the cell, a periodicity of a first transmission power and a second transmission power in the cell, wherein the first transmission power is lower than the second transmission power, obtaining cell measurement results, applying the configuration information to determine whether cell measurement results are obtained during a first transmission power period or during the second transmission power period, and modifying, at least when in an idle or in an inactive state, cell measurement results obtained during at least one of the first transmission power period or the second transmission power period to compensate the transmission power difference.

According to an aspect, there is provided a non-transitory computer readable medium comprising program instructions which, when executed by an apparatus cause the apparatus to perform at least the following: providing at least a cell in a wireless network, transmitting, in the cell, configuration information that at least indicates, for at least one beam in the cell, a periodicity of a first transmission power and a second transmission power in the cell, wherein the first transmission power is lower than the second transmission power, applying the transmission power to downlink transmissions according to the configuration information, and scheduling at least broadcasting of control information comprising one or more of a synchronization signal, system information or paging to occur during at least the second transmission power period.

### BRIEF DESCRIPTION OF THE DRAWINGS

In the following, various example embodiments will be described in greater detail with reference to the accompanying drawings, in which
FIG. 1 illustrates an example of a wireless communication network;
FIG. 2 illustrates a signal flow diagram according to an example embodiment;
FIG. 3 illustrates examples of periodicity configurations;
FIG. 4 further examples of periodicity configurations;
FIG. 5 illustrates a flow chart according to an example embodiment;
FIG. 6 illustrates a flow chart according to an example embodiment;
FIG. 7 illustrates a flow chart according to an example embodiment;
FIG. 8 illustrates a signal flow diagram according to an example embodiment;
FIG. 9 illustrates a signal flow diagram according to an example embodiment;
FIG. 10 illustrates an exemplified system architecture of an apparatus;
FIG. 11 illustrates an exemplified system architecture of an apparatus;
FIG. 12 illustrates an exemplified system architecture of an apparatus;

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments within the scope of the claims. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only. Further, although terms including ordinal numbers, such as "first", "second", etc., may be used for describing various elements, the elements are not restricted by the terms. The terms are used merely for the purpose of distinguishing an element from other elements. For example, a first transmission power could be termed a second transmission power, and vice versa, without departing from the scope of the present disclosure.

Further, it should be appreciated that, as used herein, the terms "the at least one" and "the one or more" mean "any one of the at least one" and "any one of the one or more", respectively. Furthermore, as used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

Some example embodiments described herein may be implemented in a wireless communication network comprising a radio access network based on one or more of the following radio access technologies, RATs,: global system for mobile communications, GSM, or any other second generation, 2G, radio access technology, universal mobile telecommunication system, UMTS, 3G, based on basic wideband-code division multiple access, W-CDMA,, high-speed packet access, HSPA, long term evolution, LTE, LTE-Advanced, fourth generation, 4G, fifth generation, 5G, 5G new radio, NR, 5G-Advanced i.e., 3GPP NR Rel-18 and beyond, sixth generation, 6G, or seventh generation, 7G, and beyond. Some examples of radio access networks include the universal mobile telecommunications system, UMTS, radio access network, UTRAN, the evolved universal terrestrial radio access network, E-UTRA, or the next generation radio access network, NG-RAN. The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties.

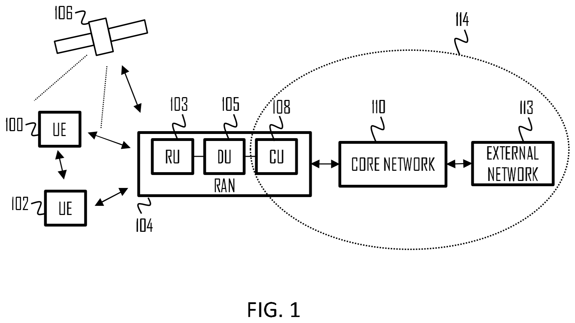

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the example embodiments described herein to other wireless communication networks provided with necessary properties.

The example wireless communication network shown in FIG. 1 includes a radio access network, RAN, and a core network 110.

FIG. 1 shows user equipment, UE, 100, 102 configured to be in a wireless connection on one or more communication channels in a radio cell with an access node 104 of a radio access network.

The access node 104 may comprise a computing device configured to control the radio resources of the access node 104 and to be in a wireless connection with one or more UEs 100, 102. The access node 104 may also be referred to as a base station, a base transceiver station, BTS, an access point, a cell site, a network node, a radio access network node, a RAN node, or a network device.

The access node 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The access node 104 may include or be coupled to transceivers. From the transceivers of the access node 104, a connection may be provided to an antenna unit that establishes a bi-directional radio link to one or more UEs 100, 102. The antenna unit may comprise an antenna or antenna element, or a plurality of antennas or antenna elements.

The wireless connection (e.g., radio link) from a UE 100, 102 to the access node 104 may be called uplink, UL, or reverse link, and the wireless connection (e.g., radio link) from the access node 104 to the UE 100, 102 may be called downlink (DL) or forward link. A UE 100 may also communicate directly with another UE 102, and vice versa, via a wireless connection generally referred to as a sidelink, SL. It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for sending and/or receiving control plane signaling and also for routing data from one access node to another access node.

The access node 104 may further be connected to a core network, CN, 110. The core network 110 may comprise an evolved packet core, EPC, network and/or a 5^{th} generation core network, 5GC. The EPC may comprise network entities, such as a serving gateway, S-GW for routing and forwarding data packets, a packet data network gateway, P-GW, for providing connectivity of UEs to external packet data networks, and/or a mobility management entity, MME. The 5GC may comprise one or more network functions, such as at least one of: a user plane function, UPF, an access and mobility management function, AMF, a location management function, LMF, and/or a session management function, SMF.

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and access node operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module, SIM, including, but not limited to, the following types of computing devices: a mobile phone, a smartphone, a personal digital assistant, PDA, a handset, a computing device comprising a wireless modem (e.g., an alarm or measurement device, etc.), a laptop computer, a desktop computer, a tablet, a game console, a notebook, a multimedia device, a reduced capability, RedCap, device, a wearable device (e.g., a watch, earphones or eyeglasses) with radio parts, a household appliance with radio parts, a sensor comprising a wireless modem, or a computing device comprising a wireless modem integrated in a vehicle or in a house, for example.

Any feature described herein with a UE may also be implemented with a corresponding apparatus, such as a relay node. An example of such a relay node may be a layer 3 relay, self-backhauling relay, towards the access node. The self-backhauling relay node may also be called an integrated access and backhaul, IAB, node. The IAB node may comprise two logical parts: a mobile termination, MT, part, which takes care of the backhaul link(s) (i.e., link(s) between IAB node and a donor node, also known as a parent node) and a distributed unit, DU, part, which takes care of the access link(s), i.e., child link(s) between the IAB node and UE(s), and/or between the IAB node and other IAB nodes (multi-hop scenario).

Another example of such a relay node may be a layer 1 relay called a repeater. The repeater may amplify a signal received from an access node and forward it to a UE, and/or amplify a signal received from the UE and forward it to the access node.

It should be appreciated that the UE 100, 102 may also be a nearly exclusive uplink-only device, of which an example may be a camera or video camera loading images or video clips to a network. The UE 100, 102 may also be a device having capability to operate in an Internet of Things, IoT, network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1 by "cloud" 114). The UE 100, 102 may also utilize the cloud 114. In some applications, the computation for a given UE may be carried out in the cloud 114 or in another UE.

The wireless communication network may also comprise a central control entity, such as a network management system, NMS, or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

Various techniques described herein may also be applied to a cyber-physical system, CPS, (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question may have inherent mobility, are a subcategory of cyber-physical systems. Examples of mobile physical systems include mobile robotics and electronics transported by humans or animals.

5G enables using multiple-input and multiple-output, MIMO, antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications, mMTC, including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability, inter-radio interface operability, such as between below 6GHz, cmWave, and mmWave.

5G wireless communication networks may also apply network slicing, in which multiple independent and dedicated virtual sub-networks (network instances) may be created within the same physical infrastructure to run services that have different requirements on latency, reliability, throughput and mobility.

In one embodiment, an access node 104 may comprise: a radio unit, RU, 103 comprising a radio transceiver, TRX, i.e., a transmitter, Tx, and a receiver, Rx; one or more distributed units, DUs, 105 that may be used for the so-called Layer 1, L1, processing and real-time Layer 2, L2, processing; and a central unit, CU, 108 (also known as a centralized unit) that may be used for non-real-time L2 and Layer 3, L3, processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit, BBU. The CU and DU may also be comprised in a radio access point, RAP.

The CU 108 may be a logical node hosting radio resource control, RRC, service data adaptation protocol, SDAP, and/or packet data convergence protocol, PDCP, of the NR protocol stack for an access node 104. The CU 108 may comprise a control plane, CU-CP, which may be a logical node hosting the RRC and the control plane part of the PDCP protocol of the NR protocol stack for the access node 104. The CU 108 may further comprise a user plane, CU-UP, which may be a logical node hosting the user plane part of the PDCP protocol and the SDAP protocol of the CU for the access node 104.

The DU 105 may be a logical node hosting radio link control, RLC, medium access control, MAC, and/or physical, PHY, layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU, vCU. In addition to the vCU, there may also be a virtualized DU, vDU, provided by a cloud computing system. Furthermore, there may also be a combination, where the DU may be implemented on so-called bare metal solutions, for example application-specific integrated circuit, ASIC, or customer-specific standard product, CSSP, system-on-a-chip, SoC.

Edge cloud may be brought into the radio access network by utilizing network function virtualization, NFV, and software defined networking, SDN. Using edge cloud may mean access node operations to be carried out, at least partly, in a computing system operationally coupled to a remote radio head, RRH, or a radio unit, RU, 103 of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing, MEC, servers may be placed between the core network 110 and the access node 104. It should be appreciated that MEC may be applied in LTE wireless communication networks as well.

A 5G wireless communication network, "5G network", may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine, M2M, or Internet of Things, IoT, devices or for passengers on board of vehicles, or ensuring service availability for critical communications, and future railway, maritime, or aeronautical communications. Satellite communication may utilize geostationary earth orbit, GEO, satellite systems, or low earth orbit, LEO, satellite systems, such as mega-constellations (i.e., systems in which hundreds of (nano)satellites are deployed). Alternatively, the satellites may be an airborne devices, such as an unmanned aerial vehicle, UAV, or a high-altitude platform system, HAPS. A given satellite 106 may provide communication services on Earth via one or more satellite beams. The one or more satellite beams create one or more cells over a given service area that may be bounded by the field of view of the satellite 106.

It is obvious for a person skilled in the art that the access node 104 depicted in FIG. 1 is just an example of a part of a radio access network, and in practice the radio access network may comprise a plurality of access nodes 104, the UEs 100, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway, HNB-GW, (not shown in FIG. 1). An HNB-GW, which may be installed within an operator's radio access network, may aggregate traffic from a large number of Home eNodeBs or Home gNodeBs back to a core network 110 of the operator.

6G wireless communication networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

It is envisaged that 7G, that will succeed the 5G and 6G technologies, will be able to satisfy the requirements of extremely high bandwidth, almost zero latency, and universal integration.

Due to scarcity of spectrum, spectrum sharing is one approach for enabling new bands for wireless communications, and thereby optimizing usage of resources over the air. A band, which refers to a specific range of radio frequencies, may be shared between radio access technologies based on IEEE 802.11 or IEEE 802.15 specifications, for example, and radio access technologies based on 5G, 6G, 7G or beyond. IEEE is an abbreviation for the Institute of Electrical and Electronics Engineers. Below different implementations are described for radio access technologies based on 5G, 6G, 7G or beyond that enable the spectrum sharing with Wi-Fi, for example, so that requirements, e.g. for indoor operations, can be met. Wi-Fi is an example of a wireless network based on IEEE 802.11 or IEEE 802.15 specifications.

Some example embodiments are described below using principles and terminology of 5G radio access technology without limiting the example embodiments to 5G radio access technology, however.

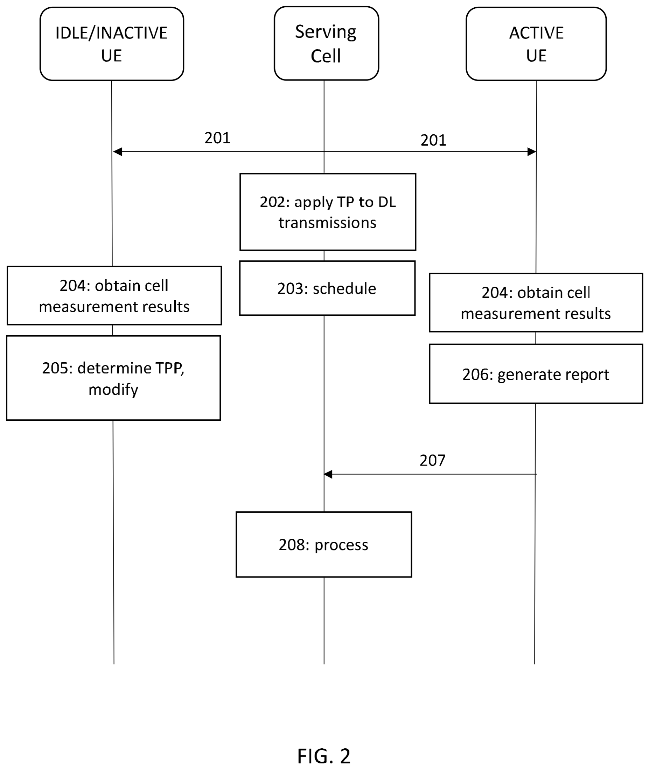

FIG. 2 illustrates an example of a signal flow diagram illustrating information exchange and related functionality for different embodiments. In the illustrated example, a serving cell depicts an apparatus providing at least a cell over which a plurality of apparatuses may receive configuration information. Examples of such apparatuses, called herein UEs for the sake of clarity, are given above. The apparatus providing at least the cell may be a radio access node, examples of which are given above. The serving cell may use a band shared with e.g. Wi-Fi, and in the illustrated example, is configured to employ alternating transmission power periods, as will be described in more detail. For the sake of clarity, the plurality of apparatuses are depicted by two apparatuses: one in a connected state, e.g. in RRC_CONNECTED state, the apparatus being called herein as "connected UE" and denoted as "active UE", and one in an idle or in an inactive state, e.g. in RRC_IDLE or in RRC_INACTIVE state, the apparatus being denoted by "idle/inactive UE". It is a straightforward solution for the person skilled in the art to extend and apply the principles of the information exchange illustrated in FIG. 2 to any number of apparatuses in idle, inactive or connected states, to any number of cells, and to any number of beams in cell, or any apparatus(es) providing at least a cell. In the RRC_CONNECTED state, the UE (apparatus) is engaged in active communication with a radio access node (i.e. apparatus providing the cell), whereas in the RRC_INACTIVE or RRC_IDLE state, the UE is not communicating actively with the radio access node. Hence, one apparatus may be configured to implement both "connected UE" and "idle/inactive UE" functionality described herein.

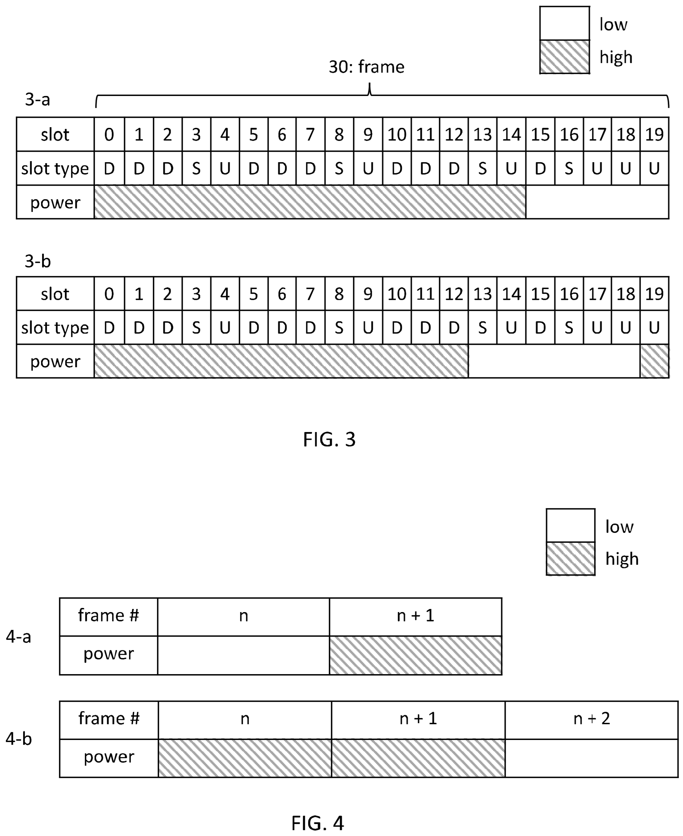

Referring to FIG. 2, in the illustrated example, the serving cell broadcast (message 201), i.e. transmits configuration information. In other examples, dedicated signaling may be used, or a combination of broadcast to all apparatuses with dedicated signaling to at least some of the connected apparatuses may be used, to transmit the configuration information. The configuration information (message 201) at least indicates, for at least one beam in the cell, a periodicity of a first transmission power and a second transmission power in the cell, wherein the first transmission power is lower than the second transmission power. The configuration information may indicate the periodicity per a beam, per one or more sets of beams, or for all beams in the cell. For example, every beam in a cell may have its own periodicity, or some of the beams may have the same periodicity, or all the beams may have the same periodicity, or none of the beams may have periodicity, or any combination thereof. Different examples of the periodicity will be described in more detail below with FIG 3, and FIG 4. The period during which the first transmission power is used, is called herein a first transmission power period, or a low transmission power period, or shortly a first period, or a low power period. Correspondingly, the period during which the second transmission power is used, is called herein a second transmission power period, or a high transmission power period, or shortly a second period, or a high power period. The configuration information may be provided via System Information, for example or via a Radio Resource Control, RRC, procedure. When provided via dedicated signaling some aspects of the common configuration provided via the broadcast, e.g. via the System Information, may be customized for the UE depending e.g. on its radio conditions and active services.

The configuration information (message 201) may further comprise timing reference indicating a start of the first period. Apparatuses, e.g. UEs, may then determine the start of the first period based on the timing reference. The timing reference may be given using a system frame number, SFN, or the system frame number and a slot number. In a similar way as with the periodicity, the configuration information may comprise timing information per a beam, timing information per one or more sets of beams, or timing information to be used in all beams in the cell.

The configuration information (message 201) may also indicate information on downlink, DL, power of first and second periods. The information may indicate, for example, relative difference between transmission power, e.g. transmission power during low power periods may be 3dB less than the transmission power during high power periods. In a similar way as with the periodicity, the configuration information may indicate DL power of first and/or second periods per a beam, per one or more sets of beams, or to be used in all beams in the cell. For example, the DL power during high power periods may be the same for all beams in the cell, but the DL power during low power periods may be different in the beams, or at least in some of the beams, or vice versa, or any combination thereof

The configuration information (message 201) may also indicate information on uplink, UL, power restrictions during high and low power periods. The information may be, for example, a reduction in maximum transmission power for random access procedures or sounding reference symbol, SRS, transmissions during low power periods. UE may be configured to employ the power restrictions, for example when determining power headroom, PHR, reporting. In a similar way as with the periodicity, the configuration information may indicate UL power restrictions during high and/or low power periods per a beam, per one or more sets of beams, or to be used in all beams in the cell. For example, the UL power restrictions during high power periods may be the same for all beams in the cell, but the UL power restrictions during low power periods may be different in the beams, or at least in some of the beams, or vice versa, or any combination thereof.

The configuration information (message 201) may also indicate conditions under which the UL power restrictions may apply. A non-limiting example of a condition includes that, e.g., if in the serving cell a reference symbol reference power, or a reference symbol received power, both denoted as RSRP below, determined by the UE, is below a threshold, the UE will apply the UL power restrictions.

The configuration information (message 201) may also indicate whether the UE is to report a poor connection, for example poor coverage/quality conditions measured during the low power periods, if a poor connection is determined. The configuration information may comprise a criterion for a poor connection, e.g. for poor coverage/quality. The criterion may be based on RSRP and/or a reference signal received quality, or a reference symbol received quality, both denoted as RSRQ below.

The configuration information (message 201) may indicate whether to modify measurements results and /or how the measurement results obtained are to be modified and/or how to report measurement results. A non-limiting examples for such conditions include a set of RRC states, a set of measurement types, for example a set of Layer 1, layer 2 and/or Layer 3 measurements, and a set of measurement results, e.g. channel state information, CSI, feedback or uplink power headroom, PHR.

In an implementation, the serving cell and the UEs may comprise a default configuration information for the periodicity. The default configuration may be called an initial configuration. In the implementation, the configuration information (message 201) may be an indication to start to use the default configuration or include information when the default configuration is to be used. In the implementation, the configuration information (message 201) may further comprise information updating the default configuration.

The serving cell applies, in block 202, transmission power to downlink transmissions according to the configuration information (message 201). In other words, when a beam in a cell is configured with a periodicity, the serving cell applies the periodicity configuration with the beam.

The serving cell may be configured to determine how to schedule control plane signaling (control plane traffic) and user plane traffic based on the configuration transmitted in message 201. In some implementations, the serving cell may receive scheduling information from another apparatus in the wireless network. In the illustrated example, the serving cell schedules, in block 203, at least broadcasting of control information comprising one or more of a synchronization signal, synchronization signal blocks, SSBs, system information or paging to occur during at least the second transmission power period. At least one of repetitions of control information may be scheduled to occur during the first transmission power period or repetitions of user plane traffic scheduled during the first transmission power period may be scheduled to occur during the second transmission power period. The serving cell may be configured to prioritize certain user plane traffic, for example user plane traffic to "poor connection UEs" to occur during high power periods. (A "poor connection UE" refers to a connected UE with poor connection, e.g. coverage/quality during low power periods and/or to a connected UE with a service having stringent quality of service requirements that are not met during the low power period. A non-limiting examples of services having stringent quality of service requirements include a service with a small latency budget, such as extended reality, XR, or services requiring Ultra-Reliable Low Latency Communications, URLLC, with requirements of 1ms latency and 9 nine reliability.

The apparatuses, e.g. the idle/inactive UE, and the connected UE obtain, in block 204, cell measurement results. For example, reference signals are transmitted in cells, and measurement results of the reference signals in different cells, including the serving cell, may be obtained. The reference signals may be positioning reference signals and/or channel state information reference signals, or channel status information reference signals, for example. The measurement results may comprise RSRP, RSRQ, channel impulse response, cell identifiers, beam identifiers, and/or angle of arrival, for example. The cell measurement results may be from each beam of the cell separately, for example, every beam may comprise its own measurement results, or all the beams may comprise measurement results altogether, or none of the beams may comprise measurement results, or all the beams may comprise measurement results according to a mixture variation of these previous options.

In the illustrated example of FIG. 2, the idle/inactive UE applies the configuration information and determines, in block 205, whether cell measurement results, obtained in block 205, are obtained during the first transmission power period or during the second transmission power period. In other words, the idle/inactive UE modifies in block 205 the cell measurement results to compensate for the transmission power difference during at least one of the first transmission power period or the second transmission period. The modifying of the measurement results may include scaling measurements obtained at least during one of the first transmission power period or the second transmission power period based on the relative power difference between the first and second transmission powers. The modifying may include altering layer 3, L3, measurement filtering for DL based on the difference between the first transmission power and the second transmission power to account for the transmission power difference.

The connected UE generates in block 206 a report based on the cell measurement results obtained in block 204. Depending on an implementation, the connected UE may or may not generate the report as if message 201 would not have been received, i.e. without modifying the cell measurement results obtained, or without modifying content of the report. In some implementations, the connected UE determines, whether the cell measurement results are obtained during the first transmission power period or during the second transmission power period. In such implementations, the connected UE may modify the measurement results as described above in block 205, i.e. in a similar way as in idle/inactive state (idle/inactive UE), and the content to the report is generated using the modified measurement results. Alternatively, or additionally, in such implementations, the connected UE may generate a report to contain at least one cell measurement result obtained during the first transmission power period and at least one cell measurement result obtained during the second transmission power period In other words, the connected UE may modify the content to comprise two separate pieces of information on the serving cell instead of one, to reflect the periodicity.

When the report is generated, the connected UE transmits the report (message 208) to the serving cell, i.e. to the wireless network

The serving cell processes, in block 208, the content (information) in the report. In implementations, in which the connected UE generates the report without modifying the cell measurement results obtained, or with modified content generated without modifying the cell measurement results obtained, the serving cell may modify in block 208 the cell measurement results to compensate the transmission power difference as described above with block 205, i.e. in a similar way as the idle/inactive UE.

In one implementation, prior to the information exchange illustrated in FIG 2, the serving cell may be configured to compare a measurement result, for example a measured serving cell reference symbol reference power, received from the connected UE, to a corresponding threshold, to determine, whether or not transmit message 201 to the connected UE. In the implementation, the measurement result being below the threshold indicates that the connected UE is in a location, for example in an indoor location, with a greater probability to interfere with a Wi-Fi access point, resulting that message 201 will be transmitted. Naturally, more than one measurement result may be compared with a corresponding threshold to determine whether or not to transmit message 201.

Even though not illustrated in the example of FIG.2, message 201 may be transmitted a plurality of times, to repeat the configuration information and/or to update at least some pieces of the configuration information transmitted earlier or comprised in the default configuration. For example, the serving cell may be configured to compare measurement result(s) to different thresholds, to determine whether or not to update the configuration information.

FIG. 3 and FIG. 4 disclose different non-limiting examples of periodicity configurations. The purpose of the examples is to illustrate that there are various ways to define the periodicity, or pattern, of high and low power periods.

FIG. 3 illustrates examples of a periodicity within a frame which in the example of FIG 3 is a time division duplex frame structure 30. The illustrated frame 30 is a system frame with 20 slots with a duration of 10 ms. The frame comprises slots allocatable at least for downlink transmissions, denoted by D, slots allocatable for uplink transmissions, denoted by U, and slots, called special slots, denoted by S, wherefrom resources are allocatable to uplink transmissions and to downlink transmission. For the sake of clarity, a low power transmission period, or the first transmission power period, is indicated by "low", and a high transmission power period, or the second transmission power period is indicated by "high" in the examples. In the example of 3-a, the consecutive slots forming the low power transmission period are slots number (#) 15 to 19, and the consecutive slots forming the high transmission power period are slots number (#) 0 to 14. For example, in the example of 3-a, the high transmission power period follows a DDDSU pattern whereas the low transmission power period is more UL heavy. With this periodicity within a frame, the apparatus providing the serving cell, e.g. a gNB, may leverage high power transmissions 75% of the time (or during 7.5 ms considering sub carrier spacing, SCS, = 30 kHz) and be restricted to low power transmissions 25% of the time (or for 2.5 ms).

In the example of 3-b, the consecutive slots forming the low transmission power period are slots number (#) 13 to 18, and the consecutive slots forming the high transmission power period are a slot number 19 in previous frame (not shown), and slots number 0 to 12, the slot number 19 shown forming a high transmission power period with slots number 0 to 12 in the next frame (not shown). In other words, the number of slots forming a period may vary, and consecutive slots forming a transmission period may be in subsequent frames.

FIG. 4 illustrates examples of a periodicity between frames, which may be time division duplex frames.

Referring to FIG. 4, in the example of 4-a, the number of consecutive frames having the first transmission power is 1, and the number of consecutive frames having the second transmission power is 1, meaning that apparatus providing the serving cell, e.g. a gNB, may leverage high power transmissions 50% of the time and be restricted to low power transmissions 50% of the time. In the example of 4-b, the number of consecutive frames having the first transmission power is 1, and the number of consecutive frames having the second transmission power is 2, meaning that apparatus providing the serving cell, e.g. a gNB, may leverage high power transmissions about 66 % of the time (or during 10 ms considering SCS = 30 kHz) and be restricted to low power transmissions about 33 % of the time.

Still a further example of periodicity includes that slots in frames indicated in FIG. 4 as low may be configured to have periodicity within the frame, examples of which are given above with FIG. 3. Hence, successive high transmission power periods may have different lengths.

The low transmission power period can be leveraged by a Wi-Fi access point, for example, that has an overlapping service area with the serving cell, for transmissions with minimal interference from the serving cell. The Wi-Fi access point may also leverage the high transmission power period if e.g. interference is low or if the apparatus providing the serving cell is not transmitting because the apparatus is in, e.g., an energy-saving state.

The periodicity may be used also for other purposes than for spectrum sharing. For example, the periodicity may be used for energy saving purposes. The apparatus providing the cell, may use low power periods for a beam, or beams, when the amount of user plane data traffic over the beam or beams is small, thereby using less energy for downlink transmissions. Correspondingly, the UEs use less energy for uplink transmissions. Naturally, when the periodicity is for spectrum sharing, a further advantage is that also energy is saved.

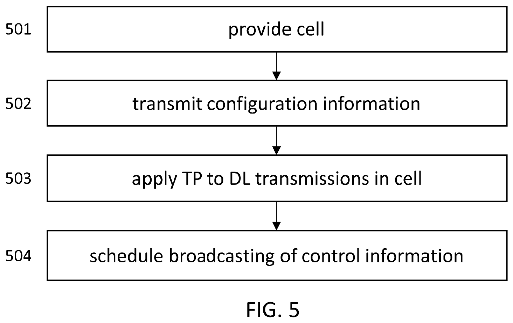

FIG 5. Illustrates a flow chart according to an example embodiment of the serving cell.

Referring to FIG.5, the serving cell provides, in block 501, at least a cell in a wireless network.

In block 502, the serving cell transmits configuration information to the apparatus, e.g. the idle/inactive UE, or the connected UE, wherein the configuration information at least indicates, for at least one beam in the cell, a periodicity of a first transmission power and a second transmission power in the cell, wherein the first transmission power is lower than the second transmission power. Further non-limiting examples of configuration information are described above with FIG 2.

After transmitting configuration information to UE, the serving cell applies, in block 503, the transmission power to downlink transmissions according to the configuration information. In block 504, the serving cell schedules at least broadcasting of control information comprising one or more of a synchronization signal, system information or paging to occur during at least the second transmission power period, for example as described above with FIG.2.

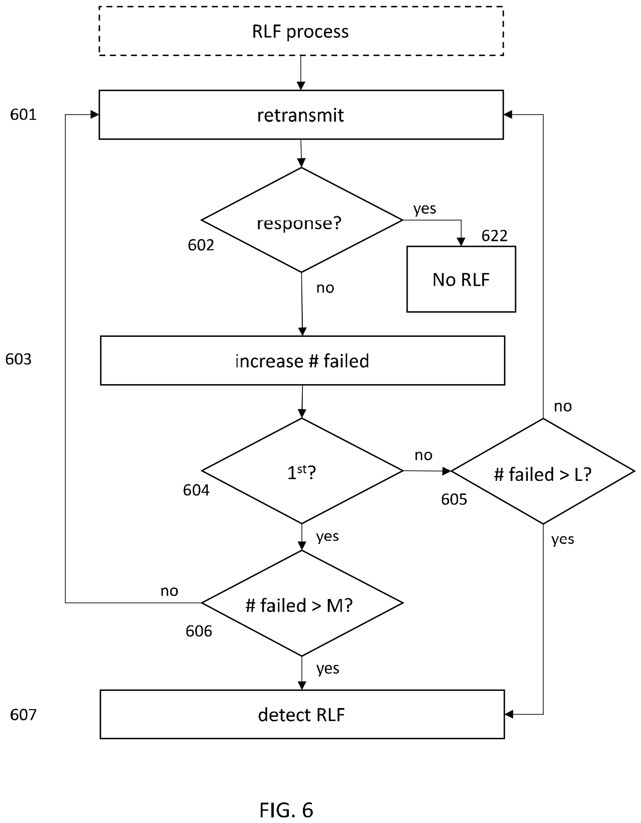

FIG. 6 illustrates a flow chart according to an example embodiment in which a radio link failure, RLF, procedure is amended to comprise a first radio link failure process to be applied during first transmission power periods, and a second radio link failure process to be applied during second transmission power periods. More precisely, the flow chart illustrates a high-level example of an RLF procedure the UE may be configured to perform, only showing some details of the RLF procedure. The shown details describe how the RLF procedure may be amended to take into account alternating transmission power periods, other details of the RLF procedure being irrelevant for the adaptation of the RLF procedure and therefore they are not described in more detail herein. It should be appreciated that an apparatus providing a serving cell may be configured to perform a similar radio link failure procedure.

In the example of FIG. 6, L and M denote a number of failures to be detected to determine an occurrence of a radio link failure, M to be used in the first radio link failure process and L in the second radio link failure process. Further, it is assumed that M is bigger than L. In other words, the number of radio link failure occurrences to be detected to determine the occurrence of the radio link failure in the first radio link failure process is bigger than in the second radio link failure process. That takes into account that a probability of a transmission failure is bigger during the lower (first) transmission power periods. M and L may be preconfigured, and/or M and L may be default values, and/or M and L may be obtained in message 201, i.e. in the configuration information for the transmission power periodicity. The configuration information may comprise values for M and L, or the configuration information may indicate how the value of M differs from a value of L which may be given in a radio link failure configuration, for example.

In the example of FIG. 6, it is assumed that the UE has transmitted uplink data to the serving cell but has not received a response, for example, an acknowledgment of reception of an uplink user plane data transmitted, or synchronization information requested in an uplink control plane data transmitted, and hence the RLF process, described in FIG. 6, is triggered.

Referring to FIG. 6, the UE retransmits, in block 601, the uplink data to the serving cell and waits, in block 602, whether a response is received within a predefined time. If the UE receives a response (block 602: yes) within the predefined time, there is no radio link failure (block 622), and information exchange may continue. If the UE does not receive (block 602: no) a response from the serving cell within the predefined time, it increases, in block 603, the number of failures, denoted by #failed in FIG. 6. In other words, it increases a number of failed transmissions.

Then the UE determines, in block 604, whether the transmission period during the retransmission is the first transmission power period (low transmission power period). If the transmission period is not the first transmission power period (block 604: no), the transmission period is the second transmission power period (high transmission power period) and the UE determines, in block 605, whether the number of failures (#failed) is bigger than L (a number of failures to be detected to determine an occurrence of a radio link failure). If the number of failures is bigger than L (block 605: yes), the UE detects (block 607) an occurrence of a radio link failure. If the number of failures is not bigger than L (block 605: no), the RLF process continues to block 601 for retransmission of the uplink data.

If the transmission period is the first transmission power period (block 604: yes), the UE determines, in block 606, whether the number of failures (#failed) is bigger than M (a number of failures to be detected to determine an occurrence of a radio link failure). If the number of failures is bigger than M (block 606: yes), the UE detects (block 607) an occurrence of a radio link failure. If the number of failures is not bigger than M (block 606: no), the RLF process continues to block 601 for retransmission of the uplink data.

Additionally, or alternatively, the number of failures may be increased differently in the first radio link process and in the second radio link process. In such implementations, M and L may have the same value, or L may be smaller than M, or bigger than M. Further, in such implementations, the block 604 will be performed before block 603, and the block 603 may be performed before block 605 when the, the transmission period is the second transmission power period ((block 604: no). When the transmission period is the first transmission period, the number of failures may be increased less frequently, for example every second, or every third time when no response is received.

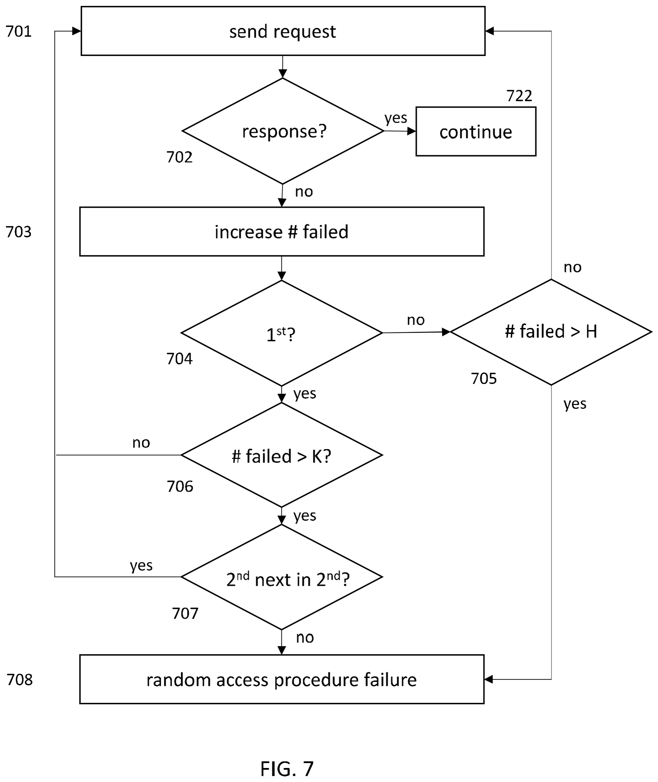

FIG. 7 illustrates a flow chart according to an example embodiment in which a random access procedure, or shortly a RACH procedure, is amended to comprise a first random access process to be applied during first transmission power periods, and a second radio access process to be applied during second transmission power periods. More precisely, the flow chart illustrates a high-level example of the RACH procedure, that an UE may be configured to perform, only showing some details of the RACH procedure. The shown details describe how the RACH procedure may be amended to take into account alternating transmission power periods, other details of the RACH procedure being irrelevant for the adaptation of the RACH procedure and therefore they are not described in more detail herein. The random access, RACH, procedure is used to establish a connection between a non-active UE and the serving cell, for example.

In the example of FIG. 7, H and K denote a number of failed random access attempts to be detected to inform upper layers on random access procedure failure, K to be used in the first random access process and H in the second random access process. Further, it is assumed that K is bigger than H. In other words, the number of failed attempts in the first random access process is bigger than in the second random access process. H and K may be preconfigured, and/or H and K may be default values, and/or H and K may be obtained in message 201, i.e. in the configuration information for the transmission power periodicity. The configuration information may comprise values for H and K, or the configuration information may indicate how the value of H differs from a value of K which may be given in a radio link failure configuration, for example.

A random access configuration, which may be sent separately from and/or with configuration information described above with message 201, may comprise information indicating, whether and/or when (e.g. one conditions to meet), uplink transmission power between consecutive random access attempts may be increased. Such information may be given separately for the first transmission time period and for the second transmission time, or same information may be used in both transmission time periods. For example, whether or not to increase uplink transmission power may depend on beam configuration of a beam used in the random access procedure, and/or on a slot in which a next random access occurrence takes place, what is the reason of a failed attempt (e.g. a response is received but it cannot be decoded).

Referring to FIG. 7, the UE transmits, in block 701, a random access request, for example a preamble, to the serving cell. In block 702, the UE determines whether the UE received a response, for example a random access response, to the request. If the UE received (block 702: yes) a response from the serving cell, the random access process continues (block 722) to finalize the establishment of the connection. If the UE did not receive a response (block 702: no) from the serving cell, it increases, in block 703, a number of failed attempts (#failed). It should be appreciated that a random access response the UE received but was not able to decode is interpreted herein as a response not received, thereby the number of failed attempts will be increased.

After increasing the number of failed attempts, the UE determines whether the transmission period is the first transmission power period in block 704. If the transmission period is not the first transmission power period (block 704: no), the transmission period is the second transmission power period, and the UE continues to determine (block 705) whether the number of failed attempts is bigger than H. If the number of failed attempts is bigger than H (block 705: yes), a random access procedure failure is dedicated in block 708. Corresponding information is passed to upper layers, and the random access procedure continues therefrom. However, since in the example, the random access procedure in the upper layer is not adapted to the periodicity, it will not be described in more detail herein. If the number of failed attempts is not bigger than H (block 705: no), the second random access process returns to block 701 for a next occasion for a random access attempt. Depending on random access configuration the UE has received, the next random access attempt may be performed with a higher uplink transmission power or with the same uplink transmission power.

If the transmission period is determined, in block 704, to be the first transmission power period (block 704: yes), the UE continues to determine (block 706) whether the number of failed attempts is bigger than K. If the number of failed attempts is bigger than K (block 706: yes), the UE determines (block 707) whether an occasion following the next occasion for a random access attempt is during the second transmission power period. If the occasion following the next occasion for a random access attempt is during the second transmission power period (block 707: yes) the UE may not detect the random access procedure failure, and hence not to inform the upper layers, but the first random access process returns to block 701 for a next occasion for a random access attempt. Depending on random access configuration the UE has received, the next random access attempt may be performed with a higher uplink transmission power or with the same uplink transmission power. If the occasion following the next occasion for a random access attempt is not during the second transmission power period (block 707: no), a random access procedure failure is detected in block 708. Corresponding information is passed to the upper layers, and the random access procedure continues therefrom, as described above.

Additionally, or alternatively, the number of failures may be increased differently in the first radio link process and in the second radio link process. In such implementations, K and H may have the same value, or H may be smaller than K, or bigger than K. Further, in such implementations, the block 704 will be performed before block 703, and the block 703 may be performed before block 705 when the, the transmission period is the second transmission power period (block 704: no). When the transmission period is the first transmission period, the number of failures may be increased less frequently, for example every second, or every third time when no response is received.

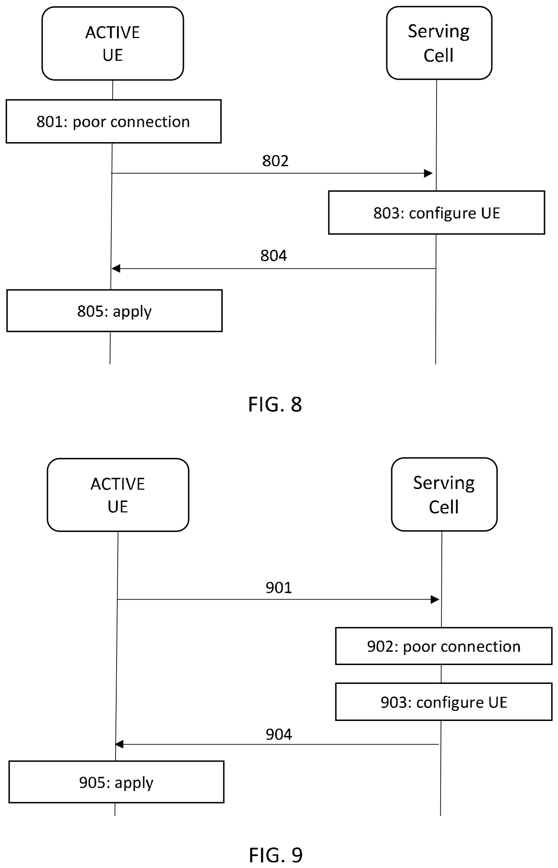

FIG. 8 illustrates a signal flow diagram illustrating information exchange and related functionality according to an example embodiment. The example of FIG. 8 illustrates an information exchange which may be happen between the connected UE and the serving cell illustrated in the example of FIG.2, for example after the connected UE has obtained measurement results (block 204 in FIG. 2) The connected UE is denoted by ACTIVE UE also in FIG. 8

Referring to FIG. 8, in the illustrated example, the connected UE determines, in block 801, that the connection to the wireless network, e.g. to the serving cell, is poor during the first transmission power period based on obtained measurement results, for example. In other words, the UE determines that it is "a poor connected UE", described above with FIG. 2. Depending on an implementation, the connected UE may be configured to modify, prior to determining that the connection is poor, the measurement results, as described above with FIG. 2, or use the measurement results as obtained when determining whether the connection is poor. The connected UE transmits, upon determining (block 801) that the connection to the wireless network is poor during the first transmission power period, to the wireless network a report (message 802) indicating that the connection is poor.

The serving cell receives the report and in the illustrated example configures (block 803) the connected UE to use at least one of discontinuous transmission, DTX, or discontinuous reception, DRX, during the first transmission power period. The serving cell transmits (message 804) configuration information comprising a configuration for at least one of the discontinuous transmission or the discontinuous reception during the first transmission power periods to the connected UE. In other words, message 804 may indicate DTX, or DRX, or DTX and DRX. Depending on an implementation, the message may or may not indicate that DTX and/or DRX is to be used during the first transmission power periods. For example, UEs may be preconfigured to use, when they have been configured with message 201 with the alternating transmission power periods, DTX and /or DRX configurations during the first transmission power periods.

The connected UE receives the configuration information (message 804) and applies, in block 805, the configuration. In other words, the connected UE does not try to transmit and/or does not monitor downlink transmissions during the first transmission power periods.

In another example, the connected UE determines in block 801 that stringent quality of service requirements for the connection are not met during the first transmission power period(s), and hence transmits the report (message 802). In this example, the serving cell detects, in block 803, that the connection has stringent quality of service requirements. The quality of service requirements may be indicated in the report and/or the serving cell may use connection related information maintained in the network. Based on the failure to meet the stringent quality of service requirements during the first transmission power period(s), the serving cell may determine to offload the connected apparatus to another cell, and transmit offloading related information in message 804, applied by the connected UE in block 805. It should be appreciated that the offloading is used as a non-limiting example of service-based load balancing the serving cell may be configured to perform. Alternatively, the serving cell may update transmission power to be used during the first transmission periods, and transmits (message 804) corresponding configuration information to the connected UE, which then applies (block 805) the received information.

FIG. 9 illustrates a signal flow diagram illustrating information exchange and related functionality according to an example embodiment. The example of FIG. 9 illustrates an information exchange which may be happen between the connected UE and the serving cell illustrated in the example of FIG.2, for example after the serving cell has transmitted message 201.

Referring to FIG. 9, in the illustrated example, the serving cell receives a measurement report (message 901), examples of which are described above with FIG. 2. Alternatively, or in addition, message 901 may illustrate control signaling from the connected UE, upon which the serving cell may obtain measurement results. In the example of FIG. 9, the serving cell detects, in block 902, based on information received in the measurement report, and/or determined using obtained measurement results, that the connection to the connected UE is poor during the first transmission power period. Depending on an implementation, the serving cell may be configured to modify, prior to detecting that the connection is poor, the information received and/or measurements obtain, as described above in FIG. 2, or use the information as received to detect whether the connection is poor. In the illustrated example, based on the connection being poor during the first transmission power period, the serving cell determines in block 903 to configure the connected apparatus to use at least one of discontinuous transmission or discontinuous reception during the first transmission power period, transmits (message 904) corresponding configuration information, which the connected UE the applies in block 905. Block 903 corresponds to block 803, message 904 corresponds to message 804, and block 905 corresponds to block 805, and hence the examples and alternatives are not repeated in vain herein.

Further, the serving cell may be configured to detect, in block 902, that the connected UE has stringent quality of service requirements for the connection are not met, and then the process may continue according to what is described above with FIG. 8.

As can be seen from the above examples, the periodicity allows to fine tune spectral usage and efficiency of a shared band, and to avoid in radio access technologies based on 5G, 6G, 7G a need for contention-based access solutions used in Wi-Fi, for example.

The blocks, related functions, and information exchanges (messages) described above by means of FIGS. 2 to 9 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

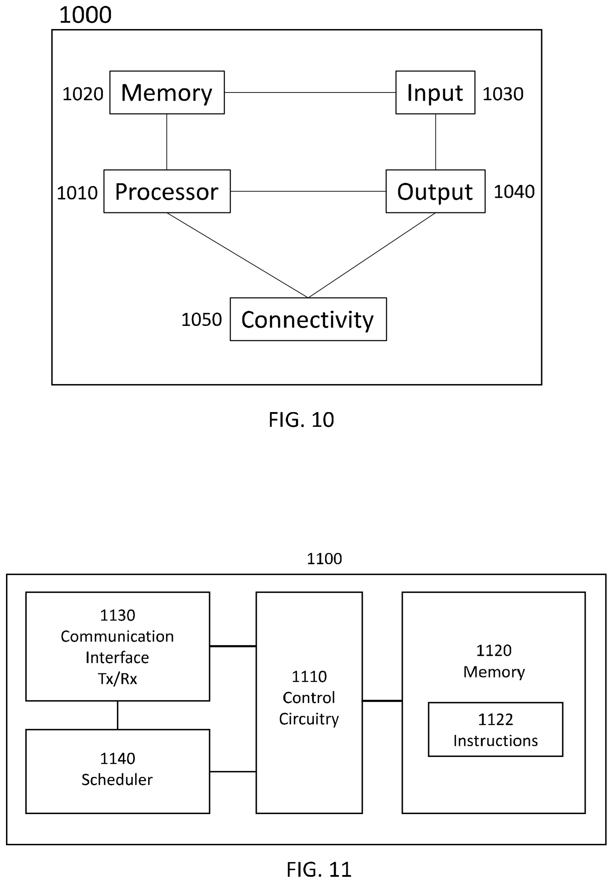

FIG. 10 illustrates an example of an apparatus 1000 comprising means for causing the apparatus 1000 to perform one or more of the example embodiments (e.g., the steps of FIG. 2) described above. For example, the apparatus 1000 may be an apparatus such as, or comprising, or comprised in, a user equipment, UE, 100, 102. The user equipment may also be called a wireless communication device, a subscriber unit, a mobile station, a remote terminal, an access terminal, a user terminal, a terminal device, or a user device.

The apparatus 1000 may comprise means for receiving, from a cell in a wireless network, configuration information that at least indicates, for at least one beam in the cell, a periodicity of a first transmission power and a second transmission power in the cell, wherein the first transmission power is lower than the second transmission power, means for obtaining cell measurement results, means for applying the configuration information to determine whether cell measurement results are obtained during a first transmission power period or during the second transmission power period, and means for modifying, at least when in an idle or in an inactive state, cell measurement results obtained during at least one of the first transmission power period or the second transmission power period to compensate the transmission power difference.

The apparatus 1000 may comprise a circuitry or a chipset applicable for realizing one or more of the example embodiments described above. For example, the apparatus 1000 may comprise at least one processor 1010. The at least one processor 1010 interprets instructions (e.g., computer program instructions) and processes data. The at least one processor 1010 may comprise one or more programmable processors. The at least one processor 1010 may comprise programmable hardware with embedded firmware and may, alternatively or additionally, comprise one or more application-specific integrated circuits, ASICs.

The at least one processor 1010 is coupled to at least one memory 1020. The at least one processor is configured to read and write data to and from the at least one memory 1020. The at least one memory 1020 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory, RAM, dynamic random-access memory, DRAM, or synchronous dynamic random-access memory, SDRAM. Non-volatile memory may be for example read-only memory, ROM, programmable read-only memory, PROM, electronically erasable programmable read-only memory, EEPROM, flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The at least one memory 1020 stores computer readable instructions that are executed by the at least one processor 1010 to perform one or more of the example embodiments described above. For example, non-volatile memory stores the computer readable instructions, and the at least one processor 1010 executes the instructions using volatile memory for temporary storage of data and/or instructions. The computer readable instructions may refer to computer program code.

The computer readable instructions may have been pre-stored to the at least one memory 1020 or, alternatively or additionally, they may be received, by the apparatus, via an electromagnetic carrier signal and/or may be copied from a physical entity such as a computer program product. Execution of the computer readable instructions by the at least one processor 1010 causes the apparatus 1000 to perform one or more of the example embodiments described above. That is, the at least one processor and the at least one memory storing the instructions may provide the means for providing or causing the performance of any of the methods and/or blocks described above.

In the context of this document, a "memory" or "computer-readable media" or "computer-readable medium" may be any non-transitory media or medium or means that can contain, store, communicate, propagate or transport the instructions for use by or in connection with an instruction execution system, apparatus, or device, such as a computer. The term "non-transitory," as used herein, is a limitation of the medium itself (i.e., tangible, not a signal) as opposed to a limitation on data storage persistency (e.g., RAM vs. ROM).

The apparatus 1000 may further comprise, or be connected to, an input unit 1030. The input unit 1030 may comprise one or more interfaces for receiving input. The one or more interfaces may comprise, for example, at least one of: one or more temperature, motion and/or orientation sensors, one or more cameras, one or more accelerometers, one or more microphones, one or more buttons and/or one or more touch detection units. Further, the input unit 1030 may comprise an interface to which external devices may connect to.

The apparatus 1000 may also comprise an output unit 1040. The output unit may comprise or be connected to one or more displays capable of rendering visual content, such as a light emitting diode, LED, display, a liquid crystal display, LCD, and/or a liquid crystal on silicon, LCoS, display. The output unit 1040 may further comprise one or more audio outputs. The one or more audio outputs may be for example loudspeakers.

The apparatus 1000 further comprises a connectivity unit 1050. The connectivity unit 1050 enables wireless connectivity to one or more external devices. The connectivity unit 1050 comprises at least one transmitter and at least one receiver that may be integrated to the apparatus 1000 or that the apparatus 1000 may be connected to. The at least one transmitter comprises at least one transmission antenna, and the at least one receiver comprises at least one receiving antenna. The connectivity unit 1050 may comprise an integrated circuit or a set of integrated circuits that provide the wireless communication capability for the apparatus 1000. Alternatively, the wireless connectivity may be a hardwired application-specific integrated circuit, ASIC. The connectivity unit 1050 may also provide means for performing at least some of the blocks or functions of one or more example embodiments described above. The connectivity unit 1050 may comprise one or more components, such as: power amplifier, digital front end, DFE, analog-to-digital converter, ADC, digital-to-analog converter, DAC, frequency converter, (de)modulator, and/or encoder/decoder circuitries, controlled by the corresponding controlling units.

It is to be noted that the apparatus 1000 may further comprise various components not illustrated in FIG.10. The various components may be hardware components and/or software components.

FIG. 11 illustrates an example of an apparatus 1100 comprising means for causing the apparatus 1100 to perform one or more of the example embodiments (e.g., the steps of FIG. 2) described above. For example, the apparatus 1100 may be an apparatus such as, or comprising, or comprised in, a network node 104 of a radio access network.

The apparatus 1100 may comprise means for providing at least a cell in a wireless network, means for transmitting, in the cell, configuration information that at least indi-cates, for at least one beam in the cell, a periodicity of a first transmission power and a second transmission power in the cell, wherein the first transmission power is lower than the second transmission power, means for applying the transmission power to downlink transmissions according to the configuration information, and means for scheduling at least broadcasting of control information comprising one or more of a synchronization signal, system information or paging to occur during at least the second transmission power period.

The apparatus 1100 may comprise, for example, a circuitry or a chipset applicable for realizing one or more of the example embodiments described above. The apparatus 1100 may be an electronic device comprising one or more electronic circuitries. The apparatus 1100 may comprise a communication control circuitry 1110 such as at least one processor, and at least one memory 1120 storing instructions 1122 which, when executed by the at least one processor, cause the apparatus 1100 to carry out one or more of the example embodiments described above. Such instructions 1122 may, for example, include computer program code (software). The at least one processor and the at least one memory storing the instructions may provide the means for providing or causing the performance of any of the methods and/or blocks described above.

The processor is coupled to the memory 1120. The processor is configured to read and write data to and from the memory 1120. The memory 1120 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory, RAM, dynamic random-access memory, DRAM, or synchronous dynamic random-access memory, SDRAM. Non-volatile memory may be for example read-only memory, ROM, programmable read-only memory, PROM, electronically erasable programmable read-only memory, EEPROM, flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1120 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1120 or, alternatively or additionally, they may be received, by the apparatus, via an electromagnetic carrier signal and/or may be copied from a physical entity such as a computer program product. Execution of the computer readable instructions causes the apparatus 1100 to perform one or more of the functionalities described above.

The memory 1120 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data, such as a current neighbour cell list, and, in some example embodiments, structures of frames used in the detected neighbour cells.

The apparatus 1100 may further comprise or be connected to a communication interface 1130, such as a radio unit, comprising hardware and/or software for realizing communication connectivity with one or more wireless communication devices according to one or more communication protocols. The communication interface 1130 comprises at least one transmitter, Tx, and at least one receiver, Rx that may be integrated to the apparatus 1100 or that the apparatus 1100 may be connected to. The communication interface 1130 may provide means for performing some of the blocks and/or functions (e.g., transmitting and receiving) for one or more example embodiments described above. The communication interface 1130 may comprise one or more components, such as: power amplifier, digital front end, DFE, analog-to-digital converter, ADC, digital-to-analog converter, DAC, frequency converter, (de)modulator, and/or encoder/decoder circuitries, controlled by the corresponding controlling units.

The communication interface 1130 provides the apparatus with radio communication capabilities to communicate in the wireless communication network. The communication interface may, for example, provide a radio interface to one or more UEs 100, 102. The apparatus 1100 may further comprise or be connected to another interface towards a core network 110, such as the network coordinator apparatus or AMF, and/or to other access nodes of the wireless communication network.

The apparatus 1100 may further comprise a scheduler 1140 that is configured to allocate radio resources. The scheduler 1140 may be configured along with the communication control circuitry 1110 or it may be separately configured.

It is to be noted that the apparatus 1100 may further comprise various components not illustrated in FIG.11. The various components may be hardware components and/or software components.

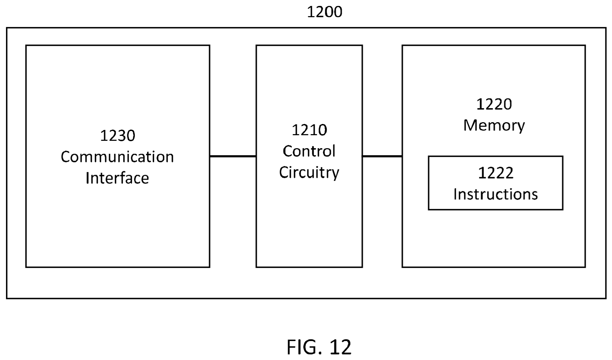

FIG. 12 illustrates an example of an apparatus 1200 of a core network 110, the apparatus 1200 comprising means for causing the apparatus 1200 to perform one or more of the example embodiments (e.g., the steps of FIG. 2) described above. For example, the apparatus 1200 may be, or comprise, or be comprised, a network function (e.g., AMF) of the core network 110.

The apparatus 1200 may comprise, for example, a circuitry or a chipset applicable for realizing one or more of the example embodiments described above. The apparatus 1200 may be an electronic device or computing system comprising one or more electronic circuitries. The apparatus 1200 may comprise a control circuitry 1210 such as at least one processor, and at least one memory 1220 storing instructions 1222 which, when executed by the at least one processor, cause the apparatus 1200 to carry out one or more of the example embodiments described above. Such instructions 1222 may, for example, include computer program code (software). The at least one processor and the at least one memory storing the instructions may provide the means for providing or causing the performance of any of the methods and/or blocks described above.

In another embodiment, the means may be a network function of the core network 110, or the means may be network function virtualization infrastructure.

The processor is coupled to the memory 1220. The processor is configured to read and write data to and from the memory 1220. The memory 1220 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory, RAM, dynamic random-access memory, DRAM, or synchronous dynamic random-access memory, SDRAM. Non-volatile memory may be for example read-only memory, ROM, programmable read-only memory, PROM, electronically erasable programmable read-only memory, EEPROM, flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1220 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1220 or, alternatively or additionally, they may be received, by the apparatus, via an electromagnetic carrier signal and/or may be copied from a physical entity such as a computer program product. Execution of the computer readable instructions causes the apparatus 1200 to perform one or more of the functionalities described above.

The memory 1220 may be implemented using any suitable data storage technology, such as semiconductor-based memory devices, flash memory, magnetic memory devices and systems, optical memory devices and systems, fixed memory and/or removable memory.

The apparatus 1200 may further comprise or be connected to a communication interface 1230 comprising hardware and/or software for realizing communication connectivity according to one or more communication protocols. The communication interface 1230 may comprise at least one transmitter, Tx, and at least one receiver, Rx, that may be integrated to the apparatus 1200 or that the apparatus 1200 may be connected to. The communication interface 1230 may provide means for performing some of the blocks and/or functions (e.g., transmitting and receiving) for one or more example embodiments described above. The communication interface 1230 may comprise one or more components, such as: power amplifier, digital front end, DFE, analog-to-digital converter, ADC, digital-to-analog converter, DAC, frequency converter, (de)modulator, and/or encoder/decoder circuitries, controlled by the corresponding controlling units.

The communication interface 1230 provides the apparatus with communication capabilities to communicate in the wireless communication network. The communication interface 1230 may, for example, provide a radio, cable or fiber interface to one or more network nodes of a radio access network.

It is to be noted that the apparatus 1200 may further comprise various components not illustrated in FIG.12. The various components may be hardware components and/or software components.

As used in this application, the term "circuitry" may refer to one or more or all of the following: a) hardware-only circuit implementations (such as implementations in analog, digital and/or quantum circuitry); and b) combinations of hardware circuit(s) and software, such as (as applicable): i) a combination of analog, digital and/or quantum hardware circuit(s) with software/firmware and ii) any or all portions of hardware processor(s) (including digital and/or quantum processor(s)) with software, and memory(ies) that work together to cause an apparatus, such as a mobile device, computing device, or server, to perform various functions; and c) any or all portions of hardware circuit(s), such as microprocessor(s), processor(s) and/or quantum processor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits, ASICs, digital signal processors, DSPs, digital signal processing devices, DSPDs, programmable logic devices, PLDs, field programmable gate arrays, FPGAs, graphics processing units, GPUs, processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be understandable to a person skilled in the art that, as technology advances, the proposed concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus comprising:
at least one processor; and
at least one memory storing instructions that, when executed by the at least one processor, cause the apparatus to at least:
receive, from a cell in a wireless network, configuration information that at least indicates, for at least one beam in the cell, a periodicity of a first transmission power and a second transmission power in the cell, wherein the first transmission power is lower than the second transmission power;
obtain cell measurement results;
apply the configuration information to determine whether cell measurement results are obtained during a first transmission power period or during the second transmission power period; and
modify, at least when in an idle or in an inactive state, cell measurement results obtained during at least one of the first transmission power period or the second transmission power period to compensate the transmission power difference.

2. The apparatus of claim 1, wherein the periodicity indicates at least one of consecutive slots that have the first transmission power within a frame and form the first transmission power period, or a number of consecutive frames having the first transmission power and forming a first transmission power period, and a number of consecutive frames having the second transmission power and forming a second transmission power period, the first and second transmission power periods alternating.

3. The apparatus of any preceding claims, wherein the at least one memory and computer program code configured to, with the at least one processor, cause the apparatus further to:
apply a first radio link failure process during first transmission power periods, and a second radio link failure process during second transmission power periods, wherein the number of failures to be detected to determine an occurrence of a radio link failure is bigger in the first radio link failure process than in the second radio link failure process.

4. The apparatus of any preceding claims, wherein the at least one memory and computer program code configured to, with the at least one processor, cause the apparatus further to:
apply a first random access process during the first transmission power periods, and a second random access process during the second transmission power periods, wherein the number of failed attempts to be detected to inform upper layer on random access procedure failure is bigger in the first random access channel process than in the second random access channel process.

5. The apparatus of claim 4, wherein the at least one memory and computer program code configured to, with the at least one processor, cause the apparatus further to:
determine, when, after a failed random access attempt during the first transmission power period the upper layers are to be informed, an occasion following the next occasion for a random access attempt is during the second transmission power period, not to inform the upper layers but to attempt random access in the next occasion.

6. The apparatus of any preceding claims, wherein the at least one memory and computer program code configured to, with the at least one processor, cause the apparatus, when the apparatus is in a connected state, further to perform at least one of:
modifying the cell measurement results obtained during at least one of the first transmission power period or the second transmission power period to compensate the transmission power difference, and transmitting at least the modified measurement results in measurement reports to the wireless network; or
transmitting, per a measurement report, at least one cell measurement result obtained during the first transmission power period and at least one cell measurement result obtained during the second transmission power period.

7. The apparatus of any preceding claims, wherein the at least one memory and computer program code configured to, with the at least one processor, cause the apparatus further to:
transmit, upon determining that a connection to the wireless network is poor during the first transmission power period, to the wireless network a report indicating that the connection is poor.

8. The apparatus of any preceding claims, wherein the at least one memory and computer program code configured to, with the at least one processor, cause the apparatus further to:
receive configuration information comprising a configuration for at least one of a discontinuous transmission or a discontinuous reception during the first transmission power periods; and
apply the configuration.

9. The apparatus of any preceding claims, wherein the at least one memory and computer program code configured to, with the at least one processor, cause the apparatus further to:
determine, prior to modifying the cell measurement results, whether a preset condition is met, and to modify the cell measurement results when the condition is met.

10. An apparatus comprising:
at least one processor; and
at least one memory storing instructions that, when executed by the at least one processor, cause the apparatus to at least:
provide at least a cell in a wireless network;
transmit, in the cell, configuration information that at least indicates, for at least one beam in the cell, a periodicity of a first transmission power and a second transmission power in the cell, wherein the first transmission power is lower than the second transmission power;
apply the transmission power to downlink transmissions according to the configuration information; and
schedule at least broadcasting of control information comprising one or more of a synchronization signal, system information or paging to occur during at least the second transmission power period.

11. The apparatus of claim 10, wherein the at least one memory and computer program code configured to, with the at least one processor, cause the apparatus further to:
schedule user plane traffic to connected apparatuses based on the configuration information, and received reports from the connected apparatuses, a report indicating a condition of a corresponding connection, to the second transmission power periods by prioritizing connected apparatuses with a poor condition of a corresponding connection.

12. The apparatus of claim 10 or 11, wherein the at least one memory and computer program code configured to, with the at least one processor, cause the apparatus further to:
schedule at least one of repetitions of control information to occur during the first transmission power period or repetitions of user plane traffic scheduled during the first transmission power period to occur during the second transmission power period.

13. The apparatus of any of claims 10 to 12, wherein the at least one memory and computer program code configured to, with the at least one processor, cause the apparatus further to:
detect that a connection to a connected apparatus is poor during the first transmission power period;
determine, based on the connection to the connected apparatus being poor during the first transmission power period, whether to configure the connected apparatus to use at least one of discontinuous transmission or discontinuous reception during the first transmission power period; and
transmit, when the connected apparatus is to be configured to use at least one of the discontinuous transmission or the discontinuous reception during the first transmission power period, configuration information comprising a configuration for at least one of the discontinuous transmission or the discontinuous reception during the first transmission power periods to the connected apparatus.

14. The apparatus of any of claims 10 to 13, wherein the at least one memory and computer program code configured to, with the at least one processor, cause the apparatus further to:
detect that a connected apparatus with stringent quality of service requirements for a connection has a poor connection during the first transmission power periods;
offload, based on the connected apparatus with stringent quality of service requirements for the connection having a connection that fails to meet the stringent quality of service requirements during the first transmission power periods, the connected apparatus to another cell.

15. The apparatus of any of claims 10 to 14, wherein the at least one memory and computer program code configured to, with the at least one processor, cause the apparatus further to:
receive from a connected apparatus a measurement report comprising cell measurement results;
apply the configuration information to determine whether cell measurement results are obtained during the first transmission power period or during the second transmission power period; and
modify cell measurement results obtained during at least one of the first transmission power period or the second transmission power period to compensate the transmission power difference.

16. The apparatus of any of claims 10 to 15, wherein the periodicity indicates at least one of consecutive slots that have the first transmission power within a frame and form the first transmission power period, or a number of consecutive frames having the first transmission power and forming a first transmission power period, and a number of consecutive frames having the second transmission power and forming a second transmission power period, the first and second transmission power periods alternating.

17. A method comprising:
receiving, from a cell in a wireless network, configuration information that at least indicates, for at least one beam in the cell, a periodicity of a first transmission power and a second transmission power in the cell, wherein the first transmission power is lower than the second transmission power;
obtaining cell measurement results;
applying the configuration information to determine whether cell measurement results are obtained during a first transmission power period or during the second transmission power period; and
modifying, at least when in an idle or in an inactive state, cell measurement results obtained during at least one of the first transmission power period or the second transmission power period to compensate the transmission power difference.

18. A method comprising:
providing at least a cell in a wireless network;
transmitting, in the cell, configuration information that at least indicates, for at least one beam in the cell, a periodicity of a first transmission power and a second transmission power in the cell, wherein the first transmission power is lower than the second transmission power;
applying the transmission power to downlink transmissions according to the configuration information; and
scheduling at least broadcasting of control information comprising one or more of a synchronization signal, system information or paging to occur during at least the second transmission power period.

19. A non-transitory computer readable medium comprising program instructions which, when executed by an apparatus cause the apparatus to perform at least the following:
receiving, from a cell in a wireless network, configuration information that at least indicates, for at least one beam in the cell, a periodicity of a first transmission power and a second transmission power in the cell, wherein the first transmission power is lower than the second transmission power;
obtaining cell measurement results;
applying the configuration information to determine whether cell measurement results are obtained during a first transmission power period or during the second transmission power period; and
modifying, at least when in an idle or in an inactive state, cell measurement results obtained during at least one of the first transmission power period or the second transmission power period to compensate the transmission power difference.

20. A non-transitory computer readable medium comprising program instructions which, when executed by an apparatus cause the apparatus to perform at least the following:
providing at least a cell in a wireless network;
transmitting, in the cell, configuration information that at least indicates, for at least one beam in the cell, a periodicity of a first transmission power and a second transmission power in the cell, wherein the first transmission power is lower than the second transmission power;
applying the transmission power to downlink transmissions according to the configuration information; and
scheduling at least broadcasting of control information comprising one or more of a synchronization signal, system information or paging to occur during at least the second transmission power period.
